(19) Europäisches Patentamt

European Patent Office

Office européen des brevets

(11) **EP 2 297 950 B1**

(12) **FASCICULE DE BREVET EUROPEEN**

(45) Date de publication et mention de la délivrance du brevet:
**04.11.2015 Bulletin 2015/45**

(21) Numéro de dépôt: **09753766.6**

(22) Date de dépôt: **04.05.2009**

(51) Int Cl.:
*H04N 21/266* (2011.01)    *H04H 60/14* (2008.01)

(86) Numéro de dépôt international:
**PCT/EP2009/055324**

(87) Numéro de publication internationale:
**WO 2009/144111 (03.12.2009 Gazette 2009/49)**

(54) **PROCEDES ET EMETTEURS PAR SALVES D'UN CONTENU MULTIMEDIA CHIFFRE, SUPPORT D'ENREGISTREMENT POUR CES PROCEDES**

VERFAHREN UND BURSTSENDER EINES ELEMENTS VERSCHLÜSSELTEN MULTIMEDIAINHALTS UND SPEICHERMEDIUM FÜR DIE VERFAHREN

METHODS AND BURST-TRANSMITTERS OF A PIECE OF ENCRYPTED MULTIMEDIA CONTENT, AND STORAGE MEDIUM FOR SAID METHODS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **30.05.2008 FR 0802970**

(43) Date de publication de la demande:
**23.03.2011 Bulletin 2011/12**

(73) Titulaire: **Viaccess**
**92057 Paris La Défense (FR)**

(72) Inventeurs:
• **CHEVALLIER, Anthony**
**F-78210 Saint Cyr l'Ecole (FR)**
• **ROQUE, Pierre**
**F-75012 Paris (FR)**

(74) Mandataire: **Colombo, Michel et al**
**Brevinnov**
**310 avenue Berthelot**
**69008 Lyon (FR)**

(56) Documents cités:
**EP-A- 1 742 473**

• **BUBURUZAN T ET AL: "Service and Content Protection in Mobile Multimedia Broadcast" CONSUMER ELECTRONICS, 2007. ISCE 2007. IEEE INTERNATIONAL SYMPOSIUM ON, IEEE, PI, 1 juin 2007 (2007-06-01), pages 1-6, XP031160299 ISBN: 978-1-4244-1109-2**

**Description**

L'invention concerne des procds et des metteurs par salves d'un contenu multimdia chiffr ainsi qu'un support d'enregistrement d'informations pour la mise en oeuvre de ces procds.

Le dposant connat des procds d'mission par salves d'un contenu multimdia chiffr comprenant :

a) le choix d'une dure T quelconque pour des cryptopriodes successives,
b) le remplacement, par un synchroniseur, d'une cl courante $TEK_j$ de chiffrement par une nouvelle cl courante $TEK_{j+1}$ chaque fin de cryptopriode,
c) le chiffrement de segments $P_i$ immdiatement conscutifs du contenu multimdia avec la cl courante de chiffrement, chaque segment $P_i$ dbutant un instant $t_{di}$ respectif,
d) la construction, par un gnrateur, d'une salve $S_i$ dont la dure de rception est plus courte que la dure de jeu du segment $P_i$, la salve $S_i$ contenant le segment $P_i$ chiffr et un cryptogramme de chaque cl courante utilise pour chiffrer le segment $P_i$.

Les salves sont plus connues sous le terme anglais de burst .

Le contenu multimdia est un contenu contenant de l'audio et/ou de la vido. Par exemple, un contenu multimdia peut tre un film, un programme audiovisuel, une chane de tlvision, une musique ou autre. Un contenu multimdia est galement appel parfois service . Le contenu multimdia est destin tre jou par un rcepteur au fur et mesure qu'il est reu.

La dure de jeu d'un segment du contenu est la dure ncessaire au jeu, vitesse normale, du segment considr sur un rcepteur.

Ici les termes chiffrer et embrouiller sont considrs comme interchangeables.

L'mission par salves de contenus multimdias chiffrs est par exemple dcrite dans la norme DVB-H (Digital Video Broadcast-Handheld) ou similaires. Le lecteur pourra se rfrer cette norme pour plus de dtails sur la conception et l'mission de salves.

L'mission par salves de contenus multimdias chiffrs a t dfinie pour permettre un rcepteur mobile d'conomiser de l'nergie lors de la rception de ces contenus multimdias. Le rcepteur mobile est par exemple un tlphone mobile, un assistant personnel PDA (Personal Digital Assistant), un rcepteur portable de tlvision, un lecteur de mdias portable (ou PMP, pour Portable Media Player) ou encore un ordinateur portable.

Dans ces procds d'mission, le contenu multimdia est divis en une succession de segments $P_i$ immdiatement conscutifs, o l'indice i indique le numro d'ordre d'un segment particulier dans cette succession. Un segment correspond la fraction du contenu multimdia incorpore et transmise par une seule salve. Ainsi, une salve contient un seul et unique segment $P_i$. La salve qui contient le segment $P_i$ est note $S_i$.

Chaque segment est compress et chiffr avant d'tre transmis dans une salve. Cette compression du segment permet d'obtenir une salve dont la dure de rception est plus courte que la dure de jeu du segment $P_i$.

Dans la pratique, plusieurs contenus multimdias sont simultanment mis. A cet effet, les salves correspondant ces diffrents contenus multimdias sont multiplexes temporellement. Par exemple, des fentres temporelles intervalles rguliers sont alloues aux salves d'un contenu multimdia spcifique. Ces fentres temporelles alloues un contenu multimdia spcifique dfinissent un canal.

Le rcepteur de ces salves ne traite qu'un seul canal la fois. Ainsi, entre deux salves conscutives de ce canal, le rcepteur peut rester inactif, ce qui permet d'conomiser de l'nergie.

La gestion des cls de chiffrement pour scuriser la transmission de ce contenu multimdia est ralise par un systme de gestion de cls ou Key management system , en anglais, qui relve du systme de protection de contenus mis en oeuvre. Par exemple, la description est ici faite en se rfrant au systme de gestion de cls du systme de protection de contenus dfini dans la norme OMA-BCAST Smartcard Profile (Open Mobile Alliance-Broadcast Services Enabler Suite Smartcard Profile). Ainsi, dans cette description, la terminologie utilise est celle dfinie dans cette norme.

Dans un systme conforme la norme OMA-BCAST Smartcard Profile, une cl $TEK_j$ (Traffic Encryption Key) courante est utilise pour chiffrer les segments actuellement mis du contenu multimdia. La cl $TEK_j$ est change intervalles de temps rguliers. Ces intervalles sont connus sous le terme de cryptopriode . Par exemple, une cryptopriode dure moins d'une minute. Typiquement une cryptopriode dure entre 5 et 20 secondes. Ici, chaque cryptopriode est note $T_j$, o j est un numro d'ordre de la cryptopriode. Pendant la cryptopriode $T_j$, seule la cl $TEK_j$ est utilise pour chiffrer le contenu multimdia. Ensuite, durant la cryptopriode $T_{j+1}$ immdiatement conscutive, seule la cl $TEK_{j+1}$ est utilise pour chiffrer le contenu multimdia et ainsi de suite.

Au moins un message $STKM_j$ (Short Time Key Message) est inclus dans chaque salve pour qu'il soit possible de dchiffrer le segment $P_i$ contenu dans cette salve. Chaque message $STKM_j$ contient un cryptogramme de la cl $TEK_j$. Dans la norme OMA-BCAST Smartcard Profile, un message STKM ne peut contenir qu'un seul cryptogramme d'une cl TEK. Un message STKM contient galement souvent des conditions d'accs au contenu multimdia destines tre compares des titres d'accs prenregistrs dans une mmoire du rcepteur afin d'autoriser et, en alternance, d'interdire le dchiffrement du contenu multimdia.

Lorsqu'un rcepteur mobile reoit une salve, il doit dchiffrer le cryptogramme de la cl $TEK_j$ contenu dans le message $STKM_j$ avant de pouvoir dchiffrer le segment $P_i$ contenu dans cette salve. Le dchiffrement du cryptogramme de la cl $TEK_j$ prend un certain temps not $T_{STKM}$. Ainsi, lorsqu'un utilisateur change de canal, c'est--dire qu'il zappe ou lorsqu'il vient d'allumer son rcepteur, le dchiffrement du segment $P_i$ encapsul dans la premire salve Si reue peut commencer au plus tt $T_{STKM}$ aprs le dbut de la rception de cette salve.

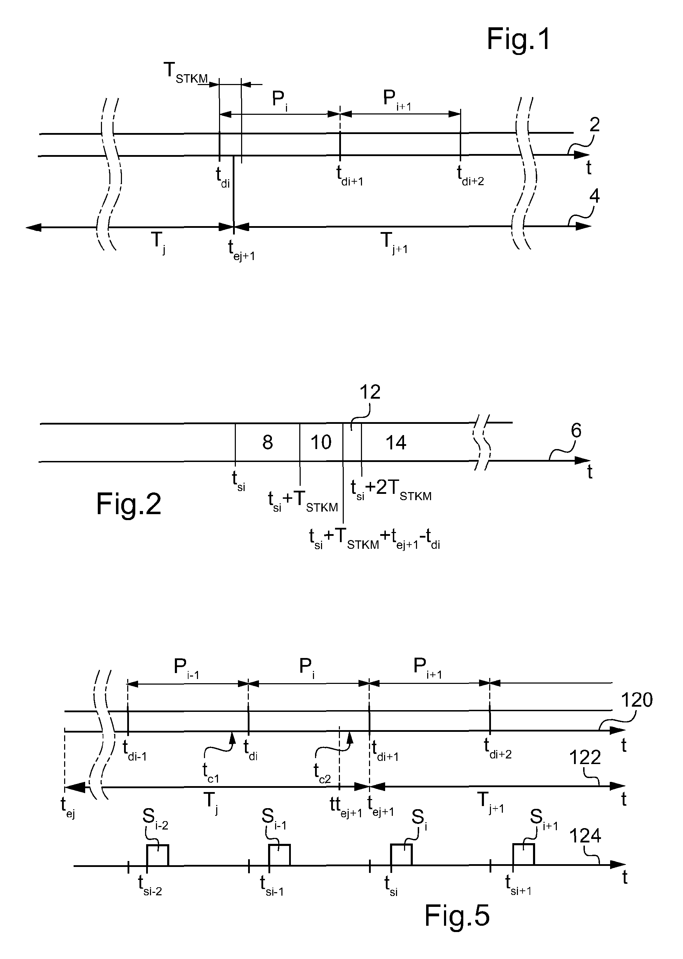

De plus, un autre problme peut survenir lors d'un changement de canal. Pour expliquer cela, il est fait rfrence aux figures 1 et 2. La figure 1 reprsente une succession de segments $P_i$ immdiatement conscutifs d'un contenu multimdia jou vitesse normale. Chaque segment $P_i$ dbute un instant $t_{di}$. Cet instant $t_{di}$ est indiqu sur un axe des temps 2.

Un deuxime axe des temps 4 reprsente les cryptopriodes sur la mme chelle. Ici, deux cryptopriodes $T_j$ et $T_{j+1}$ sont reprsentes. Pendant la cryptopriode $T_j$, les segments sont chiffrs l'aide de la cl $TEK_j$. Cette cryptopriode $T_j$ s'achve au moment o dbute la cryptopriode suivante $T_{j+1}$, c'est--dire un instant $t_{ej+1}$. Pendant la cryptopriode $T_{j+1}$, la cl utilise pour chiffrer les segments du contenu multimdia est la cl $TEK_{j+1}$.

Dans le cas particulier reprsent sur la figure 1, le changement de cryptopriode intervient entre les instants $t_{di}$ et $t_{di}+T_{STKM}$. Dans ces conditions, le dbut du segment $P_i$ est d'abord chiffr avec la cl $TEK_j$ jusqu' l'instant $t_{ej+1}$. Puis, la fin de ce segment est chiffre avec la cl $TEK_{j+1}$. La salve $S_i$ qui contient le segment $P_i$ doit donc contenir les deux cls $TEK_j$ et $TEK_{j+1}$ pour permettre le dchiffrement du segment $P_i$. A cet effet, pour tre conforme la norme OMA-BCAST Smartcard Profile, cette salve $S_i$ contient deux messages $STKM_j$ et $STKM_{j+1}$ contenant respectivement les cryptogrammes des cls $TEK_j$ et $TEK_{j+1}$.

Supposons maintenant qu'un utilisateur vient juste de changer de canal et de zapper sur le canal correspondant la salve $S_i$ de sorte que le rcepteur n'a encore aucune information sur ce canal. Dans ces conditions, le rcepteur attend la rception de la premire salve complte sur ce canal. Nous supposons que cette premire salve est la salve $S_i$ contenant le segment $P_i$. La salve $S_i$ est reue l'instant $t_{Si}$ reprsent sur un axe des temps 6 de la figure 2.

Une fois la salve $S_i$ reue, le rcepteur dchiffre le cryptogramme de la cl $TEK_j$ ce qui prend un temps $T_{STKM}$. Donc, avant l'instant $t_{Si} + T_{STKM}$, le rcepteur ne peut pas jouer en clair le contenu multimdia reu. Ceci correspond une priode de temps 8 sur la figure 2. Par exemple, pendant cette priode 8, le rcepteur affiche uniquement un cran noir ou ne laisse entendre aucun son.

Par jeu en clair , on dsigne le jeu du contenu multimdia aprs que celui-ci ait t dchiffr. Ainsi, le contenu multimdia en clair correspond des images ou des sons directement perceptibles et comprhensibles par l'utilisateur du rcepteur.

A partir de l'instant $t_{Si} + T_{STKM}$, le rcepteur commence afficher en clair le dbut du segment $P_i$.

De l'instant $t_{Si} + T_{STKM}$, un instant $t_{Si} + T_{STKM} + t_{ej+1} - t_{di}$, le dbut du segment $P_i$ est affich en clair. Cette priode porte la rfrence 10 sur la figure 2.

De plus, en parallle et partir de l'instant $t_{Si} + T_{STKM}$, le rcepteur dchiffre le cryptogramme de la cl $TEK_{j+1}$. Par consquent, l'affichage en clair de la fin du segment $P_i$ ne peut dbuter, au plus tt, qu' partir de l'instant $t_{Si} + 2T_{STKM}$.

Or ici, l'instant $t_{Si} + T_{STKM} + t_{ej+1} - t_{di}$ est antrieur l'instant $t_{Si} + 2T_{STKM}$. Donc, la cl $TEK_{j+1}$ n'est pas encore disponible la fin de l'affichage du dbut du segment $P_i$. Dans ces conditions, le rcepteur affiche de nouveau un cran noir jusqu' l'instant $t_{Si} + 2T_{STKM}$. Cette seconde priode d'affichage d'un cran noir porte la rfrence 12 sur la figure 2.

A partir de l'instant $t_{Si}+2T_{STKM}$, le rcepteur affiche en clair la fin du segment $P_i$ (priode 14).

L'apparition d'un cran noir pendant la priode 12 aprs une priode d'affichage en clair du contenu multimdia est un phnomne dsagrable pour l'utilisateur.

Bien sr, une solution pour viter ce phnomne serait d'attendre l'instant $t_{Si}+2T_{STKM}$ avant de commencer afficher le segment $P_i$ en clair. Toutefois, cette solution rallonge de faon inacceptable le temps ncessaire l'affichage du contenu multimdia en clair aprs un changement de canal.

L'invention vise remdier cet inconvnient en proposant un procd d'mission par salves d'un contenu multimdia dans lequel l'apparition d'un cran noir pendant la priode 12 est limine.

Elle a donc pour objet un procd d'mission par salves d'un contenu multimdia chiffr dans lequel le remplacement de la cl courante $TEK_j$ par la cl courante $TEK_{j+1}$ pour chiffrer le segment $P_i$ est retard jusqu'aprs un instant $t_{di} + T_{STKM}$ ou avanc ou avant l'instant $t_{di}$ en rponse un signal de synchronisation chang entre le gnrateur et le synchroniseur, la dure $T_{STKM}$ tant suprieure ou gale au temps ncessaire pour qu'un rcepteur dchiffre le cryptogramme d'une cl courante contenu dans la salve $S_i$ et strictement infrieure la dure T choisie.

Dans le procd ci-dessus, le remplacement de la cl $TEK_j$ par la cl $TEK_{j+1}$ est retard ou avanc de manire empcher que la fin de la cryptopriode tombe entre les instants $t_{di}$ et $t_{di}+T_{STKM}$. Autrement dit, la dure T de la cryptopriode $T_i$ est allonge ou raccourcie dynamiquement au cours du chiffrement du contenu multimdia pour que l'instant $t_{ej+1}$ ne tombe pas dans l'intervalle $]t_{di} ; t_{di}+T_{STKM}[$ d'un segment $P_i$. Ds lors, la situation dcrite en regard des figures 1 et 2 ne peut plus se produire, ce qui empche l'apparition d'un cran noir pendant la priode 12. De plus, ce procd permet de rsoudre le problme quelle que soit la dure T choisie. En particulier, il n'est pas ncessaire de choisir la dure T comme tant un multiple entier de la dure minimale de jeu $T_B$ des segments $P_i$.

Les modes de ralisation de ce procd peuvent prsenter une ou plusieurs des caractristiques suivantes :

- le procd comprend:

  - avant le chiffrement d'un nouveau segment $P_i$, la comparaison d'un instant courant $t_C$ tabli partir du signal de synchronisation, un instant thorique $tt_{ej+1}$ de fin de la cryptopriode courante calculable partir d'un instant $t_{ej}$ et de la dure T choisie, l'instant $t_{ej}$ tant l'instant de dbut de la cryptopriode courante, et
  - si l'instant $t_C$ est antrieur l'instant $tt_{ej+1}$, le chiffrement de la totalit du segment $P_i$ avec la cl courante $TEK_j$ mme si la fin de la cryptopriode $T_j$ tombe pendant ce segment $P_i$, et
  - si l'instant $t_C$ est postrieur l'instant $tt_{ej+1}$, le chiffrement de la totalit du segment $P_i$ avec la nouvelle cl courante $TEK_{j+1}$ ;

- le procd comprend :

  - avant le chiffrement d'un nouveau segment $P_i$ au cours duquel survient un instant $tt_{ej+1}$ de fin de la cryptopriode courante calculable partir d'un instant $t_{ej}$ de dbut de la cryptopriode courante et de la dure T choisie, la comparaison de l'instant $tt_{ej+1}$ un intervalle $]t_{di} ; t_{di} + T_{STKM}[$ tabli partir du signal de synchronisation, et
  - uniquement si l'instant $tt_{ej+1}$ est compris dans l'intervalle $]t_{di} ; t_{di} + T_{STKM}[$, le remplacement (140, 142) de la cl courante $TEK_j$ par la cl courante $TEK_{j+1}$ pour chiffrer le segment $P_i$ est retard jusqu'aprs un instant $t_{di} + T_{STKM}$ ou avanc ou avant l'instant $t_{di}$.

Ces modes de ralisation prsentent en outre les avantages suivants :

- comparer les instants $t_C$ et $tt_{ej+1}$ facilite l'implmentation du procd car il n'est alors pas ncessaire d'estimer l'instant $t_{di+1}$ de dbut du segment $P_{i+1}$ ;
- dclencher le remplacement de la cl $TEK_j$ par la cl $TEK_{j+1}$ uniquement si l'instant $tt_{ej+1}$ est en dehors de l'intervalle $]t_{di+1} ; t_{di+1} + T_{STKM}[$ permet de rsoudre le problme tout en permettant des remplacements de cls au cours d'un segment.

L'invention a galement pour objet un autre procd d'mission par salves d'un contenu multimdia chiffr comprenant :

a) le choix d'une dure T pour des cryptopriodes successives,
b) le remplacement immdiat d'une cl courante $TEK_j$ de chiffrement par une nouvelle cl courante $TEK_{j+1}$ chaque fin de cryptopriode,
c) le chiffrement de segments $P_i$ immdiatement conscutifs du contenu multimdia avec la cl courante de chiffrement, chaque segment $P_i$ dbutant un instant $t_{di}$ respectif et ayant une dure de jeu minimale constante $T_B$,
d) la construction d'une salve $S_i$ dont la dure de rception est plus courte que la dure de jeu du segment $P_i$, la salve $S_i$ contenant le segment $P_i$ chiffr et un cryptogramme de chaque cl courante utilise pour chiffrer le segment $P_i$, dans lequel la dure de jeu de chaque segment est suprieure ou gale une dure minimale $T_B$ commune tous les segments.

De plus, dans ce procd, la dure T est choisie pour vrifier les conditions suivantes :

- $T/T_B = r/q$, o r et q sont des entiers naturels non nuls et premiers entre eux, et
- $1/q \le T_{STKM}/T_B$ o la dure $T_{STKM}$ est suprieure ou gale au temps ncessaire pour qu'un rcepteur dchiffre le cryptogramme d'une cl courante contenu dans la salve $S_i$ et strictement infrieure la dure T choisie.

Dans le procd ci-dessus, la dure T initialement choisie n'est pas quelconque. Au contraire, cette dure T est choisie comme tant un nombre rationnel r/q vrifiant les deux conditions nonces ci-dessus. Lorsque T vrifie ces deux conditions, cela garantit que l'instant $t_{ej+1}$ ne tombera jamais dans l'intervalle $]t_{di} ; t_{di} + T_{STKM}[$. Donc, dans le procd ci-dessus, la dure T est constante et il n'est pas ncessaire de l'allonger ou de la raccourcir dynamiquement pour viter qu'un instant $t_{ej+1}$ tombe dans l'intervalle $]t_{di}; t_{di} + T_{STKM}[$. Par contre, la libert dans le choix de la dure T est restreinte.

Les modes de ralisation de ce procd peuvent prsenter la caractristique suivante :

- la dure de jeu de chaque segment $P_i$ est gale la dure $T_B$.

Ces modes de ralisation facilitent l'implmentation du procd.

L'invention a galement pour objet un support d'enregistrement d'informations contenant des instructions pour l'excution d'un des procds ci-dessus lorsque ces instructions sont excutes par un calculateur lectronique.

L'invention a galement pour objet un metteur par salves d'un contenu multimdia chiffr comprenant :

a) une mmoire dans laquelle est enregistre une dure T pour des cryptopriodes,

b) un synchroniseur apte remplacer une cl courante $TEK_j$ de chiffrement par une nouvelle cl courante $TEK_{j+1}$ chaque fin de cryptopriode,

c) un embrouilleur apte chiffrer des segments $P_i$ immdiatement conscutifs du contenu multimdia avec la cl courante de chiffrement, chaque segment $P_i$ dbutant un instant $t_{di}$ respectif,

d) un gnrateur d'une salve $S_i$ dont la dure de rception est plus courte que la dure de jeu du segment $P_i$, la salve $S_i$ contenant le segment $P_i$ chiffr et un cryptogramme de chaque cl courante utilise pour chiffrer le segment $P_i$.

De plus, le gnrateur et le synchroniseur sont aptes changer un signal de synchronisation pour retarder le remplacement de la cl courante $TEK_j$ par la cl courante $TEK_{j+1}$ jusqu'aprs l'instant $t_{di} + T_{STKM}$ ou pour avancer ce remplacement ou avant l'instant $t_{di}$.

Enfin, l'invention a galement pour objet un autre metteur par salves d'un contenu multimdia chiffr comprenant :

a) une mmoire dans laquelle est enregistre une dure T pour des cryptopriodes successives,

b) un synchroniseur apte remplacer immdiatement une cl courante $TEK_j$ de chiffrement par une nouvelle cl courante $TEK_{j+1}$ chaque fin de cryptopriode,

c) un embrouilleur apte chiffrer des segments $P_i$ immdiatement conscutifs du contenu multimdia avec la cl courante de chiffrement, chaque segment $P_i$ dbutant un instant $t_{di}$ respectif et ayant une dure de jeu suprieure ou gale une dure minimale $T_B$ commune tous les segments,

d) un gnrateur d'une salve $S_i$ dont la dure de rception est plus courte que la dure de jeu du segment $P_i$, la salve $S_i$ contenant le segment $P_i$ chiffr et un cryptogramme de chaque cl courante utilise pour chiffrer le segment $P_i$.

De plus, dans cet metteur la dure T choisie contenue dans la mmoire vrifie les conditions suivantes :

- $T/T_B = r/q$, o r et q sont des entiers naturels non nuls et premiers entre eux, et
- $1/q \leq T_{STKM}/T_B$.

Les modes de ralisation de cet metteur peuvent comporter la caractristique suivante :

- l'metteur est apte limiter le choix de la dure T une dure T satisfaisant les deux conditions.

L'invention sera mieux comprise la lecture de la description qui va suivre, donne uniquement titre d'exemple non limitatif et faite en se rfrant aux dessins sur lesquels :

- la figure 1 est une illustration schmatique, par chronogrammes, d'une synchronisation particulire entre des segments $P_i$ et un changement de cryptopriode,
- la figure 2 est un chronogramme illustrant schmatiquement un problme de l'tat de la technique,
- la figure 3 est une illustration schmatique de l'architecture d'un systme de transmission de contenus multimdias chiffrs l'aide d'un metteur par salves,
- la figure 4 est un organigramme d'un procd d'mission par salves d'un contenu multimdia l'aide de l'metteur de la figure 3,
- la figure 5 est un chronogramme illustrant la synchronisation des segments $P_i$ avec les changements de cryptopriodes obtenue l'aide du procd de la figure 4,
- les figures 6 et 7 sont des organigrammes d'autres modes de ralisation de procds d'mission par salves d'un contenu multimdia chiffr.

Dans ces figures, les mmes rfrences sont utilises pour dsigner les mmes lments.

Dans la suite de cette description, les caractristiques et fonctions bien connues de l'homme du mtier ne sont pas dcrites en dtail.

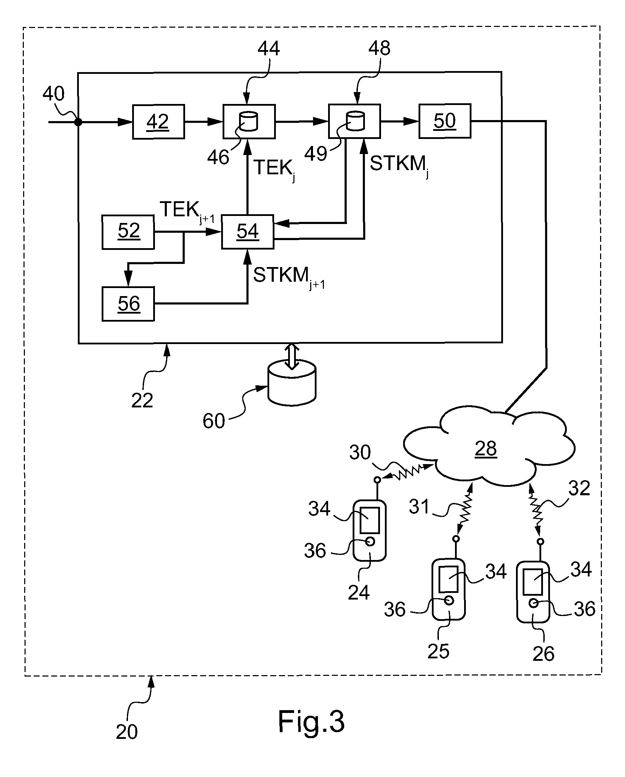

La figure 3 reprsente un systme 20 de transmission par salves de contenus multimdias. Ce systme 20 comprend un metteur 22 par salves d'un contenu multimdia vers des rcepteurs mobiles. Pour simplifier l'illustration, seuls trois rcepteurs mobiles 24 26 ont t reprsents. Les rcepteurs mobiles 24 26 sont raccords l'metteur 22 par l'intermdiaire d'un rseau 28 de transmission d'informations. Les rcepteurs 24 26 sont raccords ce rseau 28 par l'intermdiaire de liaisons sans fil respectivement 30 32 de manire permettre une mobilit.

Chaque rcepteur 24 26 est quip d'un cran 34 et d'au moins un haut-parleur 36 de manire pouvoir afficher de faon perceptible et comprhensible le contenu multimdia reu. Par exemple, les rcepteurs 24 26 sont des tlphones mobiles.

Par exemple, le rseau 28 est un rseau de tlphonie mobile.

L'metteur 22 comprend un port 40 par l'intermdiaire duquel est reu le contenu multimdia en clair destin tre mis sous forme chiffre. Ce port 40 est raccord l'entre d'un module 42 de compression du contenu multimdia. Une sortie du module 42 est raccorde une entre d'un embrouilleur 44 propre chiffrer le contenu multimdia compress. A cet effet, l'embrouilleur 44 utilise une cl courante $TEK_j$ contenue dans une mmoire 46. Une sortie de l'embrouilleur 44 est raccorde une entre d'un gnrateur 48 de salves. Ce gnrateur 48 comprend galement une mmoire tampon 49 dans laquelle est enregistr un segment $P_i$ du contenu multimdia chiffr ainsi que diffrentes autres informations transmettre sous forme d'une seule salve. Les autres informations incorpores dans une salve comprennent notamment au moins un message $STKM_j$ et ventuellement d'autres informations comme des identifiants de salves, de canaux et autres. Une sortie du gnrateur 48 est raccorde une entre d'un diffuseur 50 propre diffuser sur le rseau 28 les salves gnres par le gnrateur 48.

L'metteur 22 comprend galement un gnrateur 52 de cls propre gnrer une nouvelle cl $TEK_j$ pour chaque nouvelle cryptopriode. Une sortie de ce gnrateur 52 est raccorde une entre d'un synchroniseur 54 et une entre d'un constructeur 56 de messages $STKM_j$. Le constructeur 56 est apte construire le message $STKM_j$ contenant un cryptogramme de la cl $TEK_j$. Une sortie du constructeur 56 est raccorde une entre du synchroniseur 54.

Le synchroniseur 54 est apte remplacer la cl $TEK_j$ actuellement enregistre dans la mmoire 46 par une nouvelle cl $TEK_{j+1}$ au moment opportun.

Le synchroniseur 54 est galement apte communiquer, au gnrateur 48, le message $STKM_j$ correspondant la cl $TEK_j$ actuellement utilise par l'embrouilleur 44 pour chiffrer le segment courant du contenu multimdia.

Dans ce mode de ralisation, le gnrateur 48 est galement apte envoyer un signal de synchronisation au synchroniseur 54. Par exemple, ce signal de synchronisation indique au synchroniseur la fin de la prparation d'une salve et le dbut de la prparation de la salve suivante.

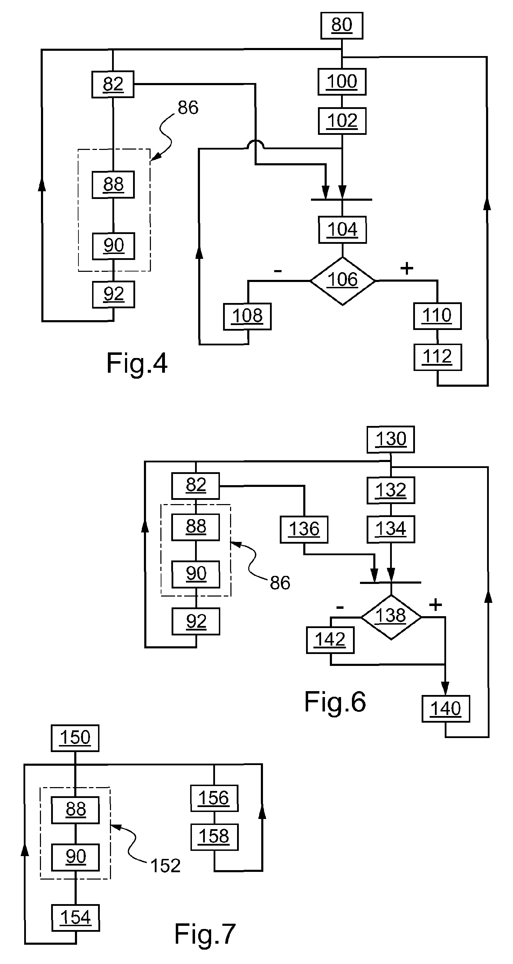

Par exemple, l'metteur 22 est ralis partir d'un ou plusieurs calculateurs lectroniques programmables propres excuter des instructions enregistres sur un support d'enregistrement d'informations. Par exemple, le synchroniseur 54 et le gnrateur 48 sont raliss partir de calculateurs lectroniques respectifs propres s'excuter en parallle. A cet effet, ici, l'metteur 22 est raccord une mmoire 60 contenant des instructions et les informations ncessaires l'excution d'au moins l'un des procds d'mission dcrits en regard des figures 4, 7 et 8.

Le fonctionnement de l'metteur 22 va maintenant tre dcrit plus en dtail l'aide du procd de la figure 4 et du chronogramme de la figure 5.

Initialement, avant toute mission d'un contenu multimdia, lors d'une tape 80, la dure T des cryptopriodes est choisie puis, par exemple, enregistre dans la mmoire 60. Dans ce premier mode de ralisation la dure T choisie peut tre quelconque. Autrement dit, il n'existe pas de restriction sur le choix de cette dure T si ce n'est qu'elle doit tre suprieure $T_{STKM}$.

Ensuite, lors de l'mission d'un contenu multimdia chiffr, lors d'une tape 82, le gnrateur 48 envoie un signal de synchronisation au synchroniseur 54 pour lui indiquer qu'il va bientt commencer prparer une nouvelle salve. Par exemple, le gnrateur 48 envoie ce signal lorsqu'il a fini de gnrer la salve prcdente et avant de gnrer la salve suivante.

Aprs, lors d'une tape 86, la prochaine salve diffuser est prpare. Par exemple, lors d'une opration 88, le module 42 compresse le segment courant $P_i$ du contenu multimdia puis l'embrouilleur 44 chiffre ce segment compress en utilisant cet effet la cl actuellement enregistre dans sa mmoire 46. Au fur et mesure que ce segment est chiffr, celui-ci est enregistr dans la mmoire tampon 49.

Ensuite, lors d'une opration 90, lorsque la quantit d'informations enregistres dans la mmoire 49 dpasse un seuil prdfini, le gnrateur 48 dbute la construction de la salve $S_i$ contenant le segment $P_i$. En particulier, lors de l'opration 90, le gnrateur 48 associe dans une seule et mme salve :

- le segment $P_i$ compress et chiffr,
- un identifiant de salve,
- un message $STKM_j$ si le segment $P_i$ a uniquement t chiffr l'aide de la cl $TEK_j$ ou deux messages $STKM_j$ et $STKM_{j+1}$ si le segment $P_i$ a t chiffr l'aide successivement, de la cl $TEK_j$ et de la cl $TEK_{j+1}$.

Une fois la prparation de la salve $S_i$ termine, celle-ci est transmise au diffuseur 50 qui, lors d'une tape 92, la diffuse vers l'ensemble des rcepteurs raccords l'metteur 22 par l'intermdiaire du rseau 28.

Ensuite, les tapes 82 92 sont ritres en boucle pour chaque segment $P_i$ du contenu multimdia diffuser.

En parallle des tapes 82 92, le synchroniseur 54 gre le changement de cryptopriode. Par exemple, chaque dbut de cryptopriode $T_j$, lors d'une tape 100, le synchroniseur 54 enregistre l'instant $t_{ej}$ de dbut de cette cryptopriode.

Ensuite, lors d'une tape 102, le gnrateur 52 gnre la cl $TEK_{j+1}$ qui doit tre utilise lors de la prochaine cryptopriode $T_{j+1}$. Lors de l'tape 102, une fois la cl $TEK_{j+1}$ gnre, le constructeur 56 construit immdiatement le message $STKM_{j+1}$ contenant un cryptogramme $TEK_{j+1}^*$ de la cl $TEK_{j+1}$. La cl $TEK_{j+1}$ et le message $STKM_{j+1}$ sont transmis au synchroniseur 54.

Ensuite, le gnrateur 48 envoie le signal de synchronisation au synchroniseur 54. En rponse, le synchroniseur 54 procde immdiatement une tape 104 de calcul d'un cart t. L'cart t est calcul l'aide de la relation suivante :

$$\Delta t = t_C - t_{ej},$$

o l'instant $t_C$ est l'instant courant du contenu, c'est--dire la dure de jeu cumule des segments ou parties de segments du contenu dj chiffrs, au moment o le synchroniseur 54 reoit le signal de synchronisation envoy par le gnrateur 48.

Ensuite, lors d'une tape 106, le synchroniseur 54 compare l'cart t la dure T choisie des cryptopriodes. Cette tape est un mode particulier de ralisation d'une comparaison entre l'instant courant $t_C$ et un instant thorique $tt_{ej+1}$ de fin de la cryptopriode courante $T_j$ calculable partir d'un instant $t_{ej}$ de dbut de la cryptopriode $T_j$ et de la dure T choisie.

Si l'cart t est strictement infrieur la dure T, cela signifie que la fin de la cryptopriode n'est pas encore atteinte. Dans ce cas, lors d'une tape 108, le synchroniseur 54 inhibe tout remplacement de la cl $TEK_j$ enregistre dans la mmoire 46 jusqu' la prochaine indication du gnrateur 48 selon laquelle la prparation d'une nouvelle salve va bientt dbuter. En procdant ainsi, le synchroniseur 54 empche tout remplacement de la cl enregistre dans la mmoire 46 au cours du chiffrement d'un segment. Ainsi, le synchroniseur 54 garantit qu'aucun changement de cl $TEK_j$ ne peut se produire au cours du chiffrement d'un segment $P_i$. Cela peut donc conduire rallonger la dure de la cryptopriode $T_j$ si ncessaire.

A l'issue de l'tape 108, le procd retourne en attente d'un nouveau message de synchronisation de la part du gnrateur 48.

Dans le cas contraire, c'est--dire si l'cart t est suprieur ou gal la dure T, cela signifie que la cryptopriode $T_j$ s'achve ou s'est dj acheve. Dans ce cas, lors d'une tape 110, le synchroniseur 54 remplace dans la mmoire 46 la cl $TEK_j$ par la cl $TEK_{j+1}$ avant le dbut du chiffrement du segment $P_{i+1}$. Lors de l'tape 110, le synchroniseur 54 transmet galement le message $STKM_{j+1}$ au gnrateur 48.

Ensuite, lors d'une tape 112, le synchroniseur 54 inhibe tout nouveau changement de la cl enregistre dans la mmoire 46 jusqu'au prochain signal de synchronisation. A l'issue de l'tape 112, le procd retourne l'tape 100 de manire mmoriser l'instant $t_{ej+1}$ auquel le synchroniseur 54 a procd au remplacement de la cl dans la mmoire 46 en tant que nouvel instant de dbut de la cryptopriode $T_{j+1}$ courante.

Le chronogramme de la figure 5 permet de comprendre plus en dtail le comportement et les consquences du procd de la figure 4. La figure 5 reprsente un axe des temps 120 sur lequel ont t reprsents les instants $t_{di}$ de dbut de chacun des segments $P_i$. Dans un contenu jou vitesse normale sur un rcepteur, les segments $P_i$ sont immdiatement conscutifs de sorte que l'instant de fin du jeu d'un segment correspond l'instant de dbut du jeu du segment suivant. On remarquera que ceci n'est pas ncessairement le cas du ct de l'metteur, de sorte que les chiffrements de segments conscutifs peuvent tre spars par un intervalle de temps suffisamment long, par exemple, pour permettre le remplacement de la cl de chiffrement dans la mmoire 46. L'embrouilleur 44 peut galement tre capable, au moins pendant un certain temps, de chiffrer en parallle deux canaux de contenu multimdia avec, respectivement, les cls $TEK_j$ et $TEK_{j+1}$. Dans ce cas, le remplacement de la cl courante est ralis en envoyant sur ces deux canaux le mme contenu multimdia puis en basculant d'un canal sur l'autre pour passer instantanment de la cryptopriode $T_j$ la cryptopride $T_{j+1}$ sans interrompre le flux de contenu multimdia. D'autres solutions sont encore possibles.

Sur un autre axe des temps 122, de mme chelle, l'instant $t_{ej+1}$ et un instant thorique $tt_{ej+1}$ de fin de la cryptopriode $T_j$ ont t reprsents.

L'instant $tt_{ej+1}$ correspond l'instant thorique de fin de la cryptopriode $T_j$ calcul en ajoutant l'instant $t_{ej}$ de dbut de la cryptopriode $T_j$ la dure T choisie lors de l'tape 80.

Enfin, des instants $t_{C1}$ et $t_{C2}$ reprsents sur l'axe 120 correspondent deux instants courants successifs auxquels le gnrateur 48 envoie au synchroniseur 54 le signal de synchronisation. Pour la lisibilit des figures, les instants $t_{C1}$ et $t_{C2}$ sont reprsents comme tant antrieurs, respectivement, aux instants $t_{di}$ et $t_{di+1}$.

Sur la figure 5, l'instant $t_{C1}$ est antrieur l'instant $tt_{ej+1}$. Dans ce contexte, lors de l'tape 106, le synchroniseur 54 dtermine que l'cart t est strictement infrieur la dure T. Il empche donc tout nouveau changement de cl dans la mmoire 46 jusqu'au prochain instant $t_{C2}$. L'instant $t_{C2}$ est postrieur l'instant $tt_{ej+1}$. Dans ces conditions, le synchroniseur 54 dtermine que l'cart t est strictement suprieur la dure T. Il procde donc au remplacement de la cl $TEK_j$ par la cl $TEK_{j+1}$ la fin du chiffrement du segment $P_i$ et avant le dbut du chiffrement du segment $P_{i+1}$.

Ds lors, on comprend que le prochain segment, c'est--dire le segment $P_{i+1}$ est entirement chiffr en utilisant la cl $TEK_{j+1}$. On constate galement qu'alors qu'un remplacement de cl $TEK_j$ aurait d se produire au cours du segment $P_i$, ce remplacement ne s'est produit en ralit qu' la fin du segment $P_i$. Ceci correspond un allongement de la dure de la cryptopriode $T_j$. Cet allongement de la dure de la cryptopriode $T_j$ est dclench en rponse au signal de synchronisation. Plus prcisment, ici, cet allongement de la dure de la cryptopriode $T_j$ est uniquement dclench si l'instant $tt_{ej+1}$ tombe au cours d'un segment. Dans le cas contraire, la dure de la cryptopriode est gale la dure T choisie. En procdant ainsi, on garantit que quelle que soit la dure T choisie, aucun remplacement de cl $TEK_j$ ne peut se produire dans l'intervalle $]t_{di}$ ; $t_{di} + T_{STKM}[$.

Sur la figure 5, un axe des temps 124, de mme chelle, sur lequel sont ports les instants $t_{si}$ de dbut de rception des salves Si a t reprsent.

La figure 6 reprsente un autre mode de ralisation d'un procd d'mission par salves d'un contenu multimdia chiffr. Initialement, avant la transmission du contenu multimdia, lors d'une tape 130, une dure T quelconque est choisie pour les cryptopriodes.

Ensuite, les tapes 82 92 sont ritres en boucle pour transmettre par salves le contenu multimdia. En parallle, le synchroniseur 54 gre le remplacement de la cl stocke dans la mmoire 46 par une nouvelle cl. Par exemple, lors d'une tape 132, le synchroniseur 54 enregistre l'instant $t_{ej}$ auquel a dbut la cryptopriode $T_j$ courante. Lors de l'tape 132, le synchroniseur 54 calcule galement l'instant $tt_{ej+1}$ auquel doit se produire la fin de la cryptopriode $T_j$ courante. Pour ce calcul, le synchroniseur utilise par exemple l'instant $t_{ej}$ ainsi que la dure T choisie lors de l'tape 130.

Ensuite, aprs chaque dbut de cryptopriode, lors d'une tape 134, le gnrateur 52 et le constructeur 56 fournissent, respectivement, la cl $TEK_{j+1}$ et le message $STKM_{j+1}$.

En parallle de l'tape 134, lors d'une tape 136, chaque fois que le gnrateur 48 envoie au synchroniseur 54 le signal de synchronisation, le synchroniseur 54 tablit un instant $t_{di}$ auquel doit dbuter le prochain segment contenu dans la salve qui va tre prpare. Par exemple, le signal de synchronisation est envoy chaque instant $t_{di}$ de dbut d'un segment $P_i$. Ainsi, ici, le signal de synchronisation indique le dbut de chaque segment.

Ensuite, le synchroniseur 54 procde une tape 138 lors de laquelle il vrifie si la condition suivante est remplie.

$$\left| t_{di} - tt_{ej+1} \right| > T_{STKM}$$

o $t_{di}$ est l'instant de dbut enregistr lors de l'tape 136.

L'tape 138 consiste donc comparer l'instant $tt_{ej+1}$ un intervalle $]t_{di} \; ; \; t_{di} + T_{STKM}[$ tabli partir du signal de synchronisation.

Dans le cas o cette condition est remplie, le synchroniseur 54 procde immdiatement une tape 140 de remplacement de la cl $TEK_j$ par la nouvelle $TEK_{j+1}$ sans attendre le chiffrement de la fin du segment $P_i$ courant.

Dans le cas contraire, le synchroniseur 54 retarde, lors d'une tape 142 le remplacement de la cl $TEK_j$. Par exemple, lors de l'tape 142, le synchroniseur 54 introduit un retard strictement suprieur $t_{di} + T_{STKM} - tt_{ej+1}$. Aprs avoir introduit ce retard lors de l'tape 142, le synchroniseur procde l'tape 140. A l'issue de l'tape 140, le procd retourne l'tape 132.

Ainsi, dans ce procd, contrairement au procd de la figure 4, un changement de cryptopriode peut intervenir au cours d'un segment. Toutefois, le synchroniseur 54 est apte prolonger la dure de la cryptopriode $T_j$ si l'instant $tt_{ej+1}$ tombe dans l'intervalle $]t_{di} \; ; \; t_{di} + T_{STKM}[$.

La figure 7 illustre encore un autre mode de ralisation possible du procd. Avant le dbut de l'mission du contenu multimdia, lors d'une tape 150, la dure T des cryptopriodes est choisie pour vrifier les relations suivantes :

$$T/T_B = r/q, \text{ et}$$
$$1/q \; T_{STKM}/T_B$$

o :

- r et q sont des nombres entiers naturels non nuls et premiers entre eux, et
- $T_B$ est une dure minimale qui est infrieure ou gale la plus petite dure de jeu d'un segment du contenu multimdia.

La dure $T_B$ est donc un minorant, indpendant de l'indice i, qui minore la dure de tous les segments $P_i$ du contenu multimdia. Ici, on suppose que la dure de jeu de chaque segment $P_i$ est gale la dure $T_B$. La dure $T_B$ est suprieure $T_{STKM}$.

Un tel choix de la dure T garantit qu'aucun changement de cryptopriode ne peut se produire dans l'intervalle $]t_{di} \; ; \; t_{di} + T_{STKM}[$.

Par exemple, lors de l'tape 150, l'metteur 22 limite le choix de la dure T aux seules dures respectant les relations ci-dessus. A titre d'illustration, lors de l'tape 150, une interface graphique permettant uniquement un oprateur de choisir une dure T vrifiant ces relations est prsente un oprateur de cet metteur 22. L'interface graphique est alors gnre par le synchroniseur 54.

Ensuite, lors de l'mission du contenu multimdia, chaque salve est prpare lors d'une tape 152. L'tape 152 est par exemple identique l'tape 86.

Ensuite, une fois que la salve a t prpare, celle-ci est diffuse lors d'une tape 154 identique, par exemple, l'tape 92.

Les tapes 152 et 154 sont ritres en boucle pour transmettre par salves le contenu multimdia.

En parallle, lors d'une tape 156, chaque dbut de cryptopriode, le gnrateur 52 et le constructeur 56 fournissent, respectivement, la nouvelle cl $TEK_{j+1}$ et le nouveau message $STKM_{j+1}$.

Ensuite, ds que l'instant $tt_{ej+1}$ survient, lors d'une tape 158, le synchroniseur 54 procde immdiatement au remplacement de la cl $TEK_j$ par la cl $TEK_{j+1}$ dans la mmoire 46. Lors de l'tape 158, le synchroniseur 54 transmet galement au gnrateur 48 le nouveau message STKM$_{j+1}$ correspondant la cl TEK$_{j+1}$.

Les tapes 156 et 158 sont ritres en boucle. Dans ce procd, grce au choix particulier de la dure T, il n'est plus ncessaire que le gnrateur 48 informe le synchroniseur 54 du dbut de la prparation d'une nouvelle salve. De plus, ici, l'aide du procd de la figure 7, le synchroniseur 54 n'a plus pour fonction d'allonger ou au contraire de raccourcir la dure d'une cryptopriode. Au contraire, dans ce mode de ralisation, la dure T des cryptopriodes est constante. En d'autres termes, dans ce mode de ralisation, le synchroniseur 54 est uniquement utilis pour :

- limiter le choix de la dure T, et
- effectuer le remplacement des cls dans la mmoire 46 et, en parallle, transmettre les nouveaux messages STKM$_j$ au gnrateur 48.

De nombreux autres modes de ralisation sont possibles. Par exemple, le cryptogramme de la cl TEK$_j$ contenu dans le message STKM$_j$ peut tre une rfrence une cl chiffre et prenregistre dans la mmoire du rcepteur. De faon plus gnrale, on dsigne ici par cryptogramme de la cl TEK$_j$ toutes informations ncessaires mais non suffisantes en elles-mmes pour reconstruire la cl TEK$_j$.

Le gnrateur 48 et le synchroniseur 54 peuvent tre raliss l'aide de circuits lectroniques spcialement cbls pour raliser les fonctions requises. Ainsi, ces circuits n'ont pas ncessairement recours des instructions enregistres sur un support d'enregistrement d'informations.

Dans un autre mode de ralisation, pour rsoudre le problme dcrit en regard des figures 1 et 2, il est galement possible de modifier les rcepteurs pour que chaque rcepteur soit apte traiter en parallle deux messages STKM$_j$ et STKM$_{j+1}$. Ainsi, l'issue d'une dure T$_{STKM}$, ces rcepteurs ont leur disposition la fois la cl TEK$_j$ et la cl TEK$_{j+1}$. En modifiant ainsi les rcepteurs, la r-apparition d'un cran noir pendant la priode 12 peut tre vite.

Lorsque la dure de jeu T$_B$ est connue et constante, il est galement possible de calculer l'avance si l'instant tt$_{ej+1}$ de dbut de la prochaine cryptopriode T$_{j+1}$ doit tomber dans l'intervalle ]t$_{di}$ ; t$_{di}$ + T$_{STKM}$[. Si ce calcul est effectu suffisamment en avance, il est alors possible galement de raccourcir la dure de la cryptopriode actuelle T$_j$ pour dclencher le remplacement de la cl dans la mmoire 46 non pas pendant cet intervalle mais avant l'instant t$_{di}$. Dans ce cas, la dure de la cryptopriode T$_j$ est raccourcie.

Lorsque le remplacement de la cl TEK$_j$ par la cl TEK$_{j+1}$ est avanc ou retard, ce remplacement est avanc ou retard pour ne pas tomber dans l'intervalle ]t$_{di}$ ; t$_{di}$ + T$_{STKM}$[ d'un segment prcdent ou suivant.

Lors de l'tape 150, il n'est pas ncessaire que l'metteur 22 limite les choix possibles de cette dure T. La mmorisation dans l'metteur d'une dure T satisfaisante est alors uniquement ralise sous le contrle de l'oprateur.

En variante, la dure T est choisie comme tant un multiple entier de la dure T$_B$. Dans ce cas, initialement, les instants de dbut de la premire cryptopriode et du premier segment sont synchroniss pour que la fin d'une cryptopriode ne tombe jamais dans l'intervalle ]t$_{di}$ ; t$_{di}$ + T$_{STKM}$[ d'un segment. De cette faon, la dure des cryptopriodes est constante.

## Revendications

1. Procd d'mission par salves d'un contenu multimdia chiffr, ce procd comprenant :

   a) le choix (80) d'une dure T quelconque pour des cryptopriodes successives,
   b) le remplacement (110; 140), par un synchroniseur, d'une cl courante TEK$_j$ de chiffrement par une nouvelle cl courante TEK$_{j+1}$ chaque fin de cryptopriode,
   c) le chiffrement (88) de segments P$_i$ immdiatement conscutifs du contenu multimdia avec la cl courante de chiffrement, chaque segment P$_i$ dbutant un instant t$_{di}$ respectif,
   d) la construction (90), par un gnrateur, d'une salve S$_i$ dont la dure de rception est plus courte que la dure de jeu du segment P$_i$, la salve S$_i$ contenant le segment P$_i$ chiffr et un cryptogramme de chaque cl courante utilise pour chiffrer le segment P$_i$,

   caractris en ce que le remplacement (110 ; 140) de la cl courante TEK$_j$ par la cl courante TEK$_{j+1}$ pour chiffrer le segment P$_i$ est retard jusqu'aprs un instant t$_{di}$ + T$_{STKM}$ ou avanc , ou avant, l'instant t$_{di}$ en rponse un signal de synchronisation chang (82) entre le gnrateur et le synchroniseur, la dure T$_{STKM}$ tant suprieure ou gale au temps ncessaire pour qu'un rcepteur dchiffre le cryptogramme d'une cl courante contenu dans la salve S$_i$ et strictement infrieure la dure T choisie.

2. Procd selon la revendication 1, dans lequel le procd comprend:

   - avant le chiffrement d'un nouveau segment P$_i$, la comparaison (106) d'un instant courant t$_c$ tabli partir du signal de synchronisation, un instant théorique $tt_{ej+1}$ de fin de la cryptopériode courante calculable à partir d'un instant $t_{ej}$ et de la durée T choisie, l'instant $t_{ej}$ étant l'instant de début de la cryptopériode courante, et

- si l'instant $t_c$ est antérieur à l'instant $tt_{ej+1}$, le chiffrement (88, 108) de la totalité du segment $P_i$ avec la clé courante $TEK_j$ même si la fin de la cryptopériode $T_j$ tombe pendant ce segment $P_i$, et
- si l'instant $t_c$ est postérieur à l'instant $tt_{ej+1}$, le chiffrement (88, 110) de la totalité du segment $P_{i+1}$ avec la nouvelle clé courante $TEK_{j+1}$.

**3.** Procédé selon la revendication 1, dans lequel le procédé comprend :

- avant le chiffrement d'un nouveau segment $P_i$ au cours duquel survient un instant théorique $tt_{ej+1}$ de fin de la cryptopériode courante calculable à partir d'un instant $t_{ej}$ de début de la cryptopériode courante et de la durée T choisie, la comparaison (138) de l'instant $tt_{ej+1}$ à un intervalle $]t_{di} ; t_{di} + T_{STKM}[$ établi à partir du signal de synchronisation, et
- uniquement si l'instant $tt_{ej+1}$ est compris dans l'intervalle $]t_{di} ; t_{di} + T_{STKM}[$, le remplacement (140, 142) de la clé courante $TEK_j$ par la clé courante $TEK_{j+1}$ pour chiffrer le segment $P_i$ est retardé jusqu'après un instant $t_{di} + T_{STKM}$ ou avancé ou avant l'instant $t_{di}$.

**4.** Procédé d'émission par salves d'un contenu multimédia chiffré, ce procédé comprenant :

a) le choix (150) d'une durée T pour des cryptopériodes successives,
b) le remplacement (158) immédiat d'une clé courante $TEK_j$ de chiffrement par une nouvelle clé courante $TEK_{j+1}$ à chaque fin de cryptopériode,
c) le chiffrement (88) de segments $P_i$ immédiatement consécutifs du contenu multimédia avec la clé courante de chiffrement, chaque segment $P_i$ débutant à un instant $t_{di}$ respectif et ayant une durée de jeu supérieure ou égale à une durée minimale $T_B$ commune à tous les segments,
d) la construction (90) d'une salve $S_i$ dont la durée de réception est plus courte que la durée de jeu du segment $P_i$, la salve $S_i$ contenant le segment $P_i$ chiffré et un cryptogramme de chaque clé courante utilisée pour chiffrer le segment $P_i$,

caractérisé en ce que la durée T choisie vérifie les conditions suivantes :

- $T/T_B = r/q$, où r et q sont des entiers naturels non nuls et premiers entre eux, et
- $1/q \leq T_{STKM}/T_B$ où la durée $T_{STKM}$ est supérieure ou égale au temps nécessaire pour qu'un récepteur déchiffre le cryptogramme d'une clé courante contenu dans la salve $S_i$ et strictement inférieure à la durée T choisie.

**5.** Procédé selon la revendication 4, dans lequel la durée de jeu de chaque segment $P_i$ est égale à la durée $T_B$.

**6.** Support d'enregistrement d'informations, caractérisé en ce qu'il comporte des instructions pour l'exécution d'un procédé conforme à l'une quelconque des revendications précédentes, lorsque ces instructions sont exécutées par un calculateur électronique.

**7.** Emetteur par salves d'un contenu multimédia chiffré, cet émetteur comprenant :

a) une mémoire (60) dans laquelle est enregistrée une durée T pour des cryptopériodes successives,
b) un synchroniseur (54) apte à remplacer une clé courante $TEK_j$ de chiffrement par une nouvelle clé courante $TEK_{j+1}$ à chaque fin de cryptopériode,
c) un embrouilleur (44) apte à chiffrer des segments $P_i$ immédiatement consécutifs du contenu multimédia avec la clé courante de chiffrement, chaque segment $P_i$ débutant à un instant $t_{di}$ respectif,
d) un générateur (48) d'une salve $S_i$ dont la durée de réception est plus courte que la durée de jeu du segment $P_i$, la salve $S_i$ contenant le segment $P_i$ chiffré et un cryptogramme de chaque clé courante utilisée pour chiffrer le segment $P_i$,

caractérisé en ce que le générateur (48) et le synchroniseur (54) sont aptes à changer un signal de synchronisation pour retarder le remplacement de la clé courante $TEK_j$ par la clé courante $TEK_{j+1}$ jusqu'après l'instant $t_{di} + T_{STKM}$, ou pour avancer ce remplacement , ou avant, l'instant $t_{di}$, la durée $T_{STKM}$ étant supérieure ou égale au temps nécessaire pour qu'un récepteur déchiffre le cryptogramme contenu dans la salve $S_i$ et strictement inférieure à la durée T choisie.

**8.** Emetteur par salves d'un contenu multimédia chiffré, cet émetteur comprenant :

a) une mmoire (60) dans laquelle est enregistre une dure T pour des cryptopriodes successives,

b) un synchroniseur (54) apte remplacer immdiatement une cl courante TEK$_j$ de chiffrement par une nouvelle cl courante TEK$_{j+1}$ chaque fin de cryptopriode,

c) un embrouilleur (44) apte chiffrer des segments P$_i$ immdiatement conscutifs du contenu multimdia avec la cl courante de chiffrement, chaque segment P$_i$ dbutant un instant t$_{di}$ respectif et ayant une dure de jeu suprieure ou gale une dure minimale T$_B$ commune tous les segments,

d) un gnrateur (48) d'une salve S$_i$ dont la dure de rception est plus courte que la dure de jeu du segment P$_i$, la salve S$_i$ contenant le segment P$_i$ chiffr et un cryptogramme de chaque cl courante utilise pour chiffrer le segment P$_i$,

caractris en ce que la dure T contenue dans la mmoire vrifie les conditions suivantes :

- T/T$_B$ = r/q, o r et q sont des entiers naturels non nuls et premiers entre eux, et
- 1/q T$_{STKM}$/T$_B$ o la dure T$_{STKM}$ est suprieure ou gale au temps ncessaire pour qu'un rcepteur dchiffre le cryptogramme d'une cl courante contenu dans la salve S$_i$ et strictement infrieure la dure T choisie.

**9.** Emetteur selon la revendication 8, dans lequel l'metteur est apte limiter le choix de la dure T une dure T satisfaisant les deux conditions.

## Patentansprüche

**1.** Verfahren zur bertragung in Bursts eines verschlsselten Multimediainhalts, wobei das Verfahren Folgendes aufweist:

a) die Auswahl (80) einer beliebigen Dauer T fr aufeinanderfolgende Kryptoperioden,

b) das Ersetzen (110; 140) durch eine Synchronisiereinrichtung eines laufenden Chiffrierschlssels TEK$_j$ durch einen neuen laufenden Schlssel TEK$_{j+1}$ an jedem Ende einer Kryptoperiode,

c) das Verschlsseln (88) von unmittelbar aufeinanderfolgenden Segmenten P$_i$ des Multimediainhalts mit dem laufenden Chiffrierschlssel, wobei jedes Segment P$_i$ zu einem jeweiligen Zeitpunkt t$_{di}$ beginnt,

d) das Erzeugen (90) eines Bursts S$_i$ durch einen Generator, dessen Empfangsdauer krzer als die Spieldauer des Segments P$_i$ ist, wobei der Burst S$_i$ das verschlsselte Segment P$_i$ und ein Kryptogramm von jedem laufenden Schlssel enthlt, der verwendet wird, um das Segment P$_i$ zu verschlsseln,

**dadurch gekennzeichnet, dass** das Ersetzen (110; 140) des laufenden Schlssels TEK$_j$ durch den laufenden Schlssel TEK$_{j+1}$, um das Segment P$_i$ zu verschlsseln, bis nach einem Zeitpunkt t$_{di}$ + T$_{STKM}$ aufgeschoben oder bis zu oder vor dem Zeitpunkt t$_{di}$ als Antwort auf ein Synchronisationssignal vorgezogen wird, das zwischen dem Generator und der Synchronisiereinrichtung ausgetauscht wird (82), wobei die Dauer T$_{STKM}$ lnger oder gleich der Zeit ist, die erforderlich ist, damit ein Empfnger das Kryptogramm eines laufenden Schlssels entschlsselt, das in dem Burst S$_i$ enthalten ist, und unbedingt krzer als die ausgewhlte Dauer T ist.

**2.** Verfahren nach dem Anspruch 1, wobei das Verfahren Folgendes aufweist:

- vor dem Verschlsseln eines neuen Segments P$_i$, das Vergleichen (106) eines laufenden Zeitpunkts t$_c$, der ausgehend von dem Synchronisationssignal erstellt wird, mit einem theoretischen Zeitpunkt tt$_{ej+1}$ des Endes der laufenden Kryptoperiode, der ausgehend von einem Zeitpunkt t$_{ej}$ und der gewhlten Dauer T berechnet werden kann, wobei der Zeitpunkt t$_{ej}$ der Zeitpunkt des Beginns der laufenden Kryptoperiode ist, und
- wenn der Zeitpunkt t$_c$ vor dem Zeitpunkt tt$_{ej+1}$ liegt, das Verschlsseln (88, 108) der Gesamtheit des Segments P$_i$ mit dem laufenden Schlssel TEK$_j$, selbst wenn das Ende der Kryptoperiode T$_j$ in dieses Segment P$_i$ fllt, und
- wenn der Zeitpunkt t$_c$ nach dem Zeitpunkt tt$_{ej+1}$ liegt, das Verschlsseln (88, 108) der Gesamtheit des Segments P$_{i+1}$ mit dem neuen laufenden Schlssel TEK$_{j+1}$.

**3.** Verfahren nach dem Anspruch 1, wobei das Verfahren Folgendes aufweist:

- vor dem Verschlsseln eines neuen Segments P$_i$, whrend dem ein theoretischer Zeitpunkt tt$_{ej+1}$ des Endes der laufenden Kryptoperiode, der ausgehend von einem Zeitpunkt t$_{ej}$ des Beginns der laufenden Kryptoperiode und der gewhlten Dauer T berechnet werden kann, das Vergleichen (138) des Zeitpunkts tt$_{ej+1}$ mit einem Zeitintervall ]t$_{di}$; t$_{di}$ + T$_{STKM}$[, das ausgehend von dem Synchronisationssignal erstellt wird, und
- nur wenn der Zeitpunkt tt$_{ej+1}$ in dem Zeitintervall ]t$_{di}$; t$_{di}$ + T$_{STKM}$[ liegt, wird das Ersetzen (140, 142) des

laufenden Schlssels TEK$_j$ durch den laufenden Schlssel TEK$_{j+1}$, um das Segment P$_i$ zu verschlsseln, bis nach einem Zeitpunkt t$_{di}$ + T$_{STKM}$ aufgeschoben oder bis zu oder vor dem Zeitpunkt t$_{di}$ vorgezogen.

4. Verfahren zur bertragung in Bursts eines verschlsselten Multimediainhalts, wobei das Verfahren Folgendes aufweist:

a) die Auswahl (150) einer Dauer T fr aufeinanderfolgende Kryptoperioden,
b) das unmittelbare Ersetzen (158) eines laufenden Chiffrierschlssels TEK$_j$ durch einen neuen laufenden Schlssel TEK$_{j+1}$ an jedem Ende einer Kryptoperiode,
c) das Verschlsseln (88) von unmittelbar aufeinanderfolgenden Segmenten P$_i$ des Multimediainhalts mit dem laufenden Chiffrierschlssel, wobei jedes Segment P$_i$ zu einem jeweiligen Zeitpunkt t$_{di}$ beginnt und eine Spieldauer hat, die lnger als oder gleich einer Mindestdauer T$_B$ ist, die allen Segmenten gemeinsam ist,
d) das Erzeugen (90) eines Bursts S$_i$, dessen Empfangsdauer krzer als die Spieldauer des Segments P$_i$ ist, wobei der Burst S$_i$ das verschlsselte Segment P$_i$ und ein Kryptogramm von jedem laufenden Schlssel enthlt, der verwendet wird, um das Segment P$_i$ zu verschlsseln,

**dadurch gekennzeichnet, dass** die gewhlte Dauer T die folgenden Bedingungen berprft:

- T/T$_B$ = r/q, wobei r und q natrliche, von Null verschiedene und zueinander erste ganze Zahlen sind, und
- 1/q $\leq$ T$_{STKM}$/T$_B$, wobei die Dauer T$_{STKM}$ lnger oder gleich der Zeit ist, die erforderlich ist, damit ein Empfnger das Kryptogramm eines laufenden Schlssels entschlsselt, das in dem Burst S$_i$ enthalten ist, und unbedingt krzer als die ausgewhlte Dauer T ist.

5. Verfahren nach Anspruch 4, wobei die Spieldauer von jedem Segment P$_i$ gleich der Dauer T$_B$ ist.

6. Informationsaufzeichnungsmedium, **dadurch gekennzeichnet, dass** es Anweisungen zur Durchfhrung eines Verfahrens nach einem der vorhergehenden Ansprche aufweist, wenn diese Anweisungen durch einen elektronischen Rechner ausgefhrt werden.

7. Burstsender eines verschlsselten Multimediainhalts, wobei dieser Sender Folgendes aufweist:

a) einen Speicher (60), in dem eine Dauer T fr aufeinanderfolgende Kryptoperioden aufgezeichnet ist,
b) eine Synchronisiereinrichtung (54), die geeignet ist, einen laufenden Chiffrierschlssel TEK$_j$ durch einen neuen laufenden Schlssel TEK$_{j+1}$ an jedem Ende einer Kryptoperiode zu ersetzen,
c) einen Verwrfler (44), der geeignet ist, unmittelbar aufeinanderfolgende Segmente P$_i$ von Multimediainhalten mit dem laufenden Chiffrierschlssel zu verschlsseln, wobei jedes Segmente P$_i$ zu einem jeweiligen Zeitpunkt t$_{di}$ beginnt,
d) einen Generator (48) eines Bursts S$_i$, dessen Empfangsdauer krzer als die Spieldauer des Segments P$_i$ ist, wobei der Burst S$_i$ das verschlsselte Segment P$_i$ und ein Kryptogramm von jedem laufenden Schlssel enthlt, der verwendet wird, um das Segment P$_i$ zu verschlsseln,

**dadurch gekennzeichnet, dass** der Generator (48) und die Synchronisiereinrichtung (54) geeignet sind, ein Synchronisationssignal auszutauschen, um das Ersetzen des laufenden Schlssels TEK$_j$ durch den laufenden Schlssel TEK$_{j+1}$ bis nach einem Zeitpunkt t$_{di}$+T$_{STKM}$ aufzuschieben oder dieses Ersetzen bis zu oder vor dem Zeitpunkt t$_{di}$ vorzuziehen, wobei die Dauer T$_{STKM}$ lnger oder gleich der Zeit ist, die erforderlich ist, damit ein Empfnger das Kryptogramm entschlsselt, das in dem Burst S$_i$ enthalten ist, und unbedingt krzer als die ausgewhlte Dauer T ist.

8. Burstsender eines verschlsselten Multimediainhalts, wobei dieser Sender Folgendes aufweist:

a) einen Speicher (60), in dem eine Dauer T fr aufeinanderfolgende Kryptoperioden aufgezeichnet ist,
b) eine Synchronisiereinrichtung (54), die geeignet ist, unmittelbar einen laufenden Chiffrierschlssel TEK$_j$ durch einen neuen laufenden Schlssel TEK$_{j+1}$ an jedem Ende einer Kryptoperiode zu ersetzen,
c) einen Verwrfler (44), der geeignet ist, unmittelbar aufeinanderfolgende Segmente P$_i$ des Multimediainhalts mit dem laufenden Chiffrierschlssel zu verschlsseln, wobei jedes Segment P$_i$ zu einem jeweiligen Zeitpunkt t$_{di}$ beginnt und eine Spieldauer hat, die lnger als oder gleich der Mindestdauer T$_B$ ist, die allen Segmenten gemeinsam ist,
d) einen Generator (48) eines Bursts S$_i$, dessen Empfangsdauer krzer als die Spieldauer des Segments P$_i$ ist, wobei der Burst S$_i$ das verschlsselte Segment P$_i$ und ein Kryptogramm von jedem laufenden Schlssel enthlt, der verwendet wird, um das Segment P$_i$ zu verschlsseln,

**dadurch gekennzeichnet, dass** die Dauer T, die in dem Speicher enthalten ist, die folgenden Bedingungen berprft:

- $T/T_B = r/q$, wobei r und q natrliche, von Null verschiedene und zueinander erste ganze Zahlen sind, und
- $1/q \leq T_{STKM}/T_B$, wobei die Dauer $T_{STKM}$ lnger oder gleich der Zeit ist, die erforderlich ist, damit ein Empfnger das Kryptogramm eines laufenden Schlssels entschlsselt, das in dem Burst $S_i$ enthalten ist, und unbedingt krzer als die ausgewhlte Dauer T ist.

**9.** Sender nach Anspruch 8, wobei der Sender geeignet ist, die Auswahl der Dauer T auf eine Dauer T zu begrenzen, die diese zwei Bedingungen erfllt.

## Claims

**1.** Method for burst transmission of an encrypted multimedia content, this method comprising:

a) the choice (80) of any time T for the successive cryptoperiods,
b) the replacement (110; 140), by a synchronizer, of a current encryption key $TEK_j$ by a new current key $TEK_{j+1}$ at each end of cryptoperiod,
c) the encryption (88) of immediately consecutive segments $P_i$ of the multimedia content with the current encryption key, each segment $P_i$ beginning at a respective instant $t_{di}$,
d) the construction (90), by a generator, of a burst $S_i$ whose reception time is shorter than the playing time of the segments $P_i$, the burst $S_i$ containing the encrypted segment $P_i$ and a cryptogram of each current key used to encrypt the segment $P_i$, **characterized in that** the replacement (110; 140) of the current key $TEK_j$ by the current key $TEK_{j+1}$ to encrypt the segment $P_i$ is delayed until after an instant $t_{di} + T_{STKM}$ or is advanced to, or before, the instant $t_{di}$ in response to a synchronization signal exchanged (82) between the generator and the synchronizer, the time $T_{STKM}$ being greater than or equal to the time needed for a receiver to decrypt the cryptogram of a current key contained in the burst $S_i$ and strictly less than the chosen time T.

**2.** Method according to Claim 1 in which the method comprises:

- before the encryption of a new segment $P_i$, the comparison (106) of a current instant $t_c$ established from the synchronization signal, to a theoretical instant $tt_{ej+1}$ of the end of the current cryptoperiod that can be computed from an instant $t_{ej}$ and from the chosen time T, the instant $t_{ej}$ being the start instant of the current cryptoperiod, and
- if the instant $t_c$ is prior to the instant $tt_{ej+1}$, the encryption (88, 108) of all of the segment $P_i$ with the current key $TEK_j$ even if the end of the cryptoperiod $T_j$ falls during this segment $P_i$, and
- if the instant $t_c$ is later than the instant $tt_{ej+1}$, the encryption (88, 108) of all of the segment $P_{i+1}$ with the new current key $TEK_{j+1}$.

**3.** Method according to Claim 1, in which the method comprises:

- before the encryption of a new segment $P_i$ during which there occurs a theoretical instant $tt_{ej+1}$ of the end of the current cryptoperiod that can be computed from an instant $t_{ej}$ of the start of the current cryptoperiod and from the chosen time T, the comparison (138) of the instant $tt_{ej+1}$ to an interval $]t_{di}; t_{di} + T_{STKM}[$ established from the synchronization signal, and
- only if the instant $tt_{ej+1}$ lies within the interval $]t_{di}; t_{di} + T_{STKM}[$, the replacement (140, 142) of the current key $TEK_j$ by the current key $TEK_{j+1}$ to encrypt the segment $P_i$ is delayed until after an instant $t_{di} + T_{STKM}$ or is advanced to or before the instant $t_{di}$.

**4.** Method for burst transmission of an encrypted multimedia content, this method comprising:

a) the choice (150) of a time T for the successive cryptoperiods,
b) the immediate replacement (158) of a current encryption key $TEK_j$ by a new current key $TEK_{j+1}$ at each end of cryptoperiod,
c) the encryption (88) of immediately consecutive segments $P_i$ of the multimedia content with the current encryption key, each segment $P_i$ beginning at a respective instant $t_{di}$ and having a playing time greater than or equal to a minimum time $T_B$ common to all the segments,
d) the construction (90) of a burst $S_i$ whose reception time is shorter than the playing time of the segment $P_i$, the burst $S_i$ containing the encrypted segment $P_i$ and a cryptogram of each current key used to encrypt the

segment $P_i$,

**characterized in that** the chosen time T satisfies the following conditions:

- $T/T_B = r/q$, where r and q are non-zero and coprime natural integers, and
- $1/q$ $T_{STKM}/T_B$ where the time $T_{STKM}$ is greater than or equal to the time needed for a receiver to decrypt the cryptogram of a current key contained in the burst $S_i$ and strictly less than the chosen time T.

5. Method according to Claim 4, in which the playing time of each segment $P_i$ is equal to the time $T_B$.

6. Information storage medium, **characterized in that** it comprises instructions for the execution of a method according to any one of the preceding claims, when these instructions are executed by an electronic computer.

7. Burst transmitter of an encrypted multimedia content, this transmitter comprising:

a) a memory (60) in which is stored a time T for successive cryptoperiods,
b) a synchronizer (54) suitable for replacing a current encryption key $TEK_j$ by a new current key $TEK_{j+1}$ at each end of cryptoperiod,
c) a scrambler (44) suitable for encrypting immediately consecutive segments $P_i$ of the multimedia content with the current encryption key, each segment $P_i$ beginning at a respective instant $t_{di}$,
d) a generator (48) of a burst $S_i$ whose reception time is shorter than the playing time of the segment $P_i$, the burst $S_i$ containing the encrypted segment $P_i$ and a cryptogram of each current key used to encrypt the segment $P_i$,

**characterized in that** the generator (48) and the synchronizer (54) are suitable for exchanging a synchronization signal to delay the replacement of the current key $TEK_j$ by the current key $TEK_{j+1}$ until after the instant $t_{di} + T_{STKM}$, or to advance this replacement to, or before, the instant $t_{di}$, the time $T_{STKM}$, being greater than or equal to the time needed for a receiver to decrypt the cryptogram contained in the burst $S_i$ and strictly less than the chosen time T.

8. Burst transmitter of an encrypted multimedia content, this transmitter comprising:

a) a memory (60) in which is stored a time T for successive cryptoperiods,
b) a synchronizer (54) suitable for immediately replacing a current encryption key $TEK_j$ by a new current key $TEK_{j+1}$ at each end of cryptoperiod,
c) a scrambler (44) suitable for encrypting immediately consecutive segments $P_i$ of the multimedia content with the current encryption key, each segment $P_i$ beginning at a respective instant $t_{di}$ and having a playing time greater than or equal to a minimum time $T_B$ common to all the segments,
d) a generator (48) of a burst $S_i$ whose reception time is shorter than the playing time of the segment $P_i$, the burst $S_i$ containing the encrypted segment $P_i$ and a cryptogram of each current key used to encrypt the segment $P_i$,

**characterized in that** the time T contained in the memory satisfies the following conditions:

- $T/T_B = r/q$, where r and q are non-zero and coprime natural integers, and
- $1/q T_{STKM}/T_B$ where the time $T_{STKM}$ is greater than or equal to the time needed for a receiver to decrypt the cryptogram of a current key contained in the burst $S_i$ and strictly less than the chosen time T.

9. Transmitter according to Claim 8, in which the transmitter is suitable for limiting the choice of the time T to a time T satisfying the two conditions.

Fig.1

$T_{STKM}$

$P_i$    $P_{i+1}$

2

t

$t_{di}$    $t_{di+1}$    $t_{di+2}$

4

$T_j$    $t_{ej+1}$    $T_{j+1}$

12

| 8 | 10 | 14 |

6

t

$t_{si}$

$t_{si}+T_{STKM}$

$t_{si}+2T_{STKM}$

Fig.2

$t_{si}+T_{STKM}+t_{ej+1}-t_{di}$

$P_{i-1}$    $P_i$    $P_{i+1}$

120

$t_{di-1}$    $t_{di}$    $t_{di+1}$    $t_{di+2}$

t

122

$t_{c1}$    $t_{c2}$

$t_{ej}$

$T_j$    $tt_{ej+1}$ $t_{ej+1}$    $T_{j+1}$

t

124

$S_{i-2}$    $S_{i-1}$    $S_i$    $S_{i+1}$

$t_{si-2}$    $t_{si-1}$    $t_{si}$    $t_{si+1}$

t

Fig.5

Fig.3

Fig.4

Fig.6

Fig.7